# EUROPÄISCHE PATENTSCHRIFT

(11) **EP 0 623 413 B1**
(45) Veröffentlichungstag und Bekanntmachung des Hinweises auf die Patenterteilung: **15.07.1998**
(21) Anmeldenummer: 94104773.0
(22) Anmeldetag: 25.03.1994
(51) Int. Cl.: B23D 51/10, B23B 31/22

(54) **Schnellspannvorrichtung für Stichsägeblätter**
Quick-clamping device for sabre saw blades
Dispositif de serrage rapide pour lames de scie sauteuse

(30) Priorität: 05.04.1993 DE 4311161
(43) Veröffentlichungstag der Anmeldung: 09.11.1994
(73) Patentinhaber: Kress-elektrik GmbH + Co. Elektromotorenfabrik, D-72406 Bisingen (DE)
(72) Erfinder: Binder, Alfred, D-72406 Bisingen (DE); Deibler, Karl-Eugen, D-72145 Hirrlingen (DE); Schmidpeter, Harald, D-72401 Haigerloch 1 (DE)
(74) Vertreter: Otte, Peter, Dipl.-Ing.

(56) Entgegenhaltungen:
- EP-A- 0 544 129
- DE-C- 949 381
- US-A- 1 341 934
- US-A- 2 280 620
- US-A- 3 583 716
- US-A- 3 750 283
- US-A- 4 290 617

## Beschreibung

### Stand der Technik

Die Erfindung geht aus von einer Schnellspannvorrichtung für Stichsägeblätter nach dem Oberbegriff des Anspruchs 1.

Bei bekannten einfachen Aufnahmevorrichtungen für Stichsägeblätter am Stößel einer Stichsäge weist dieser einen Aufnahmeschlitz für das obere Ende des Stichsägeblattes auf, wobei seitlich eine oder mehrere Schrauben in Gewinden des Stößels sitzen und mittels Schraubenziehern so weit in den Stößel eingeschraubt und fest angezogen werden können, daß die vorderen Schraubenenden sich gegen die seitlichen Flächen des Stichsägeblattes pressen und dieses so in der Schlitzaufnahme des Stößels im Grunde lediglich kraftschlüssig festhalten

Es sind auch kombinierte Ausführungsformen möglich, bei denen seitlich am Stichsägeblatt bajonettartig nach außen ragende Vorsprünge oder Ansätze von Haltenuten am Stichsägestößel aufgenommen werden, aber mit zusätzlichen Sicherungsmitteln notwendigerweise versehen sind, die ebenfalls wieder seitliche Schrauben umfassen, die gegen das Stichsägeblatt mit Hilfe von Werkzeugen verschraubt werden und dieses festpressen (GB-A-1173172).

Es sind auch schon Schnellspannvorrichtungen für die Sägeblatteinspannung bei Stichsägen bekannt, also schlüssellose Spannsysteme, die das Sägeblatt mit Hilfe einer Federvorspannung festklemmen. So ist es bekannt, in dem hohlen Stößel einer Stichsäge ein axial gegenüber diesem verschiebbares Halteglied anzuordnen (WO 89/08524), welches selbst einen Aufnahmeschlitz für das Sägeblatt ausbildet. Auch in diesem Fall weist das Sägeblatt im Aufnahmebereich grob eine Kreuzform auf, verfügt also über seitlich vorspringende Ansätze, die beim Einschieben des Sägeblatts in die Schnellspannvorrichtung durch Öffnungsnuten in einer unteren Sicherungsplatte hindurchtreten und anschließend mit Hilfe einer Drehbewegung, die auch von dem Halteglied mitgemacht wird, so gegenüber diesen Durchtrittsschlitzen verdreht wird, daß die seitlichen Ansätze des Stichsägeblattes in nach unten geschlossene Arretiervorsprünge in der Sicherungsplatte einfallen. In dieser Position gehalten wird das Sägeblatt durch eine auf das Halteglied einen Druck nach unten ausübende Vorspannungsfeder, die jedoch bei sehr starker Beanspruchung des Sägeblatts in axialer Richtung nicht immer sicherstellen kann, daß dieses in der gewünschten Blockierposition verbleibt. Tatsächlich ist ein Abheben des Sägeblattes aus den Haltenuten nach oben möglich, so daß das Sägeblatt in dieser Spannvorrichtung axial nachgiebig gehalten ist und ein Verdrehen während des Betriebs nur deshalb nicht erfolgt, weil das Halteglied selbst mit anderen seitlichen Vorsprüngen in die erwähnten Durchtrittsnuten an der unteren Arretierscheibe eingreift.

Aus der WO-89/08524 ist eine Schnellspannvorrichtung für Stichsägeblätter bekannt, mit einer Aufnahme im Stößel der Stichsäge, sowie mit Haltemitteln, die seitliche Vorsprünge am Stichsägeblatt hintergreifen und dadurch das Stichsägeblatt nach unten gegen ein Herausfallen sichern.

Aus der US-3 750 283 ist eine Sägeblattbefestigungsvorrichtung bekannt, bei welcher das Sägeblatt durch eine in Umfangsrichtung drehbar vorgespannte Drehhülse gelagert ist, die mit Innenflächen Steuerbahnen für Sperrkugeln bildet, die im festgespannten Zustand des Sägeblatts dieses festklemmen.

Zwar wird durch diese Vorrichtung eine verhältnismäßig einfache Montage des Sägeblatts ermöglicht. Es ist jedoch problematisch, daß das Sägeblatt nicht gegen ein Herausfallen nach unten gesichert ist.

Der Erfindung liegt die Aufgabe zugrunde, eine Schnellspannvorrichtung für Stichsägeblätter zu schaffen, die einfach und mühelos ohne Schlüssel oder sonstige Werkzeuge wie Schraubenzieher u. dgl. bedient werden kann und in der Lage ist, das Sägeblatt in der eingesetzten Position sicher und unverrückbar, auch bei rauhem Betrieb, zu halten.

### Vorteile der Erfindung

Die erfindungsgemäße Schnellspannvorrichtung löst diese Aufgabe mit den kennzeichnenden Merkmalen der Ansprüche 1 und 2 und hat den Vorteil, daß ein einwandfrei formschlüssiger Sitz in der Aufnahme des Stößels der Stichsäge erreicht werden kann, wobei von der Bedienungsperson nur sehr geringe Kräfte aufgebracht werden müssen, die lediglich die Verdrehung einer Drehhülse am Stößel in eine Einsetzposition für das Stichsägeblatt betreffen.

Aus dieser verdrehten Position kehrt die Drehhülse automatisch in die formschlüssige Sicherungs- oder Lockposition für das Stichsägeblatt zurück, welches dann ohne jeden weiteren Aufwand vollständig gegen radiale und axiale Verschiebungen gesichert im Stößel der Stichsäge arretiert ist.

Besonders vorteilhaft ist ferner, daß diese Sicherung auch bei starker Beanspruchung der Stichsäge und starken auf das Stichsägeblatt selbst einwirkenden axialen Kräften nicht mehr gelockert werden kann; eine Entnahme des Stichsägeblattes aus seiner Schnellspannhalterung ist nur bei manueller erneuter Verdrehung der Drehhülse möglich und würde ansonsten zur Zerstörung mindestens des Stichsägeblattes führen.

Der Aufbau der erfindungsgemäßen Schnellspannvorrichtung ist einfach und benötigt nur wenige Komponenten, die sämtliche am unteren Stößelende angeordnet sind, so daß komplizierte, nach oben geführte Stellmechanismen, wie sie in einer Ausgestaltung in der erwähnten Druckschrift WO 89/08524 dargestellt sind, entbehrlich sind.

Durch die in den Unteransprüchen aufgeführten Maßnahmen sind vorteilhafte Weiterbildungen und Verbesserungen der Erfindung möglich. Besonders vorteilhaft ist die Sicherung des formschlüssig aufgenommenen Stichsägeblatts gegen jede denkbare Art einer Bewegung, auch gegen Verkippen durch Ausüben eines zusätzlichen, zentrierend wirkenden Preßdrucks auf das sich nach oben verjüngende Ende des Stichsägeblatts. Verdrehungen drehungen sind schon deshalb ausgeschlossen, weil die inneren formschlüssigen Arretierelemente, die bevorzugt als Kugeln ausgebildet sind, das Stichsägeblatt durch formschlüssigen Eingriff nach oben pressen und so untere, sich wieder nach auswärts erstreckende Schultern am Stichsägeblatt in bevorzugt konisch verlaufende Aufnahmenuten am Stößel bzw. an stationären Verlängerungen des Stößels pressen, aus denen sich das Stichsägeblatt nicht durch eine seitliche Bewegung entfernen kann, da diese seitliche Bewegung auch eine nach unten gerichtete Axialbewegung erforderlich macht, die nicht möglich ist.

Besonders einfach ist die Handhabung der Schnellspannvorrichtung, indem bei nach unten ausgefahrenem Stößel eine am Stößel drehbar gelagerte Drehhülse lediglich geringfügig gegen Federvorspannung verdreht werden muß, wodurch sich eine Einführmöglichkeit für das Stichsägeblatt öffnet. Sobald das Stichsägeblatt auf Anschlag in die Aufnahmenut am Stößel eingeführt ist, braucht die Drehhülse lediglich noch losgelassen zu werden; sie läuft dann selbsttätig in ihre Ausgangsposition zurück und bewirkt das unverrückbare, formschlüssige Einspannen und Arretieren des Stichsägeblatts.

### Zeichnung

Ausführungsbeispiele der Erfindung sind in der Zeichnung dargestellt und werden in der nachfolgenden Beschreibung näher erläutert. Es zeigen:
- Fig. 1: eine Ausführungsform einer Schnellspannvorrichtung für Stichsägeblätter im senkrechten Schnitt mit aufgenommen, teilweise dargestelltem Stichsägeblatt;
- Fig. 2: eine Seitenansicht lediglich des Stößels mit aufgenommenem Stichsägeblatt, wobei auch Zentrierungsnuten gegen ein Verdrehen am Stößel erkennbar sind;
- Fig. 3: eine Ansicht der Schnellspannvorrichtung von unten mit Darstellung des Aufnahmeschlitzes und
- Fig. 4: einen Schnitt längs der Linie IV-IV der Fig. 1 mit besonderer Darstellung von Steuerbahnen an der Drehhülse für als Sperrkugeln ausgebildete Arretierelemente;
- Fig. 5 und 6: zeigen in einer Seitenansicht und einer um 90° gedrehten Seitenansicht eine vereinfachte Ausführungsform eines Stößels als weiteres Ausführungsbeispiel, wobei die
- Fig. 7 und 8: im größeren Detail die direkt in den Stößel verlegte Kugelaufnahme in einem seitlichen Schnitt und im Querschnitt darstellen.

### Beschreibung der Ausführungsbeispiele

Der Grundgedanke vorliegender Erfindung besteht darin, eine Kreuzform von Stichsägeblättern im Einführungsbereich ausnutzend mit Hilfe von radial beweglich und willkürlich verschiebbaren Sperrelementen seitliche Vorsprünge am aufgenommenem Stichsägeblatt zu hintergreifen und dieses hierdurch formschlüssig festzuhalten, bevorzugt durch die gleiche radiale Vorspannung nach oben gedrückt zu halten, so daß das Stichsägeblatt zur Verdrehsicherheit gleichzeitig mit den oberen Randkanten der seitlichen Vorsprünge in sich verjüngenden Aufnahme- und Führungsnuten am Stößel gepreßt gehalten ist.

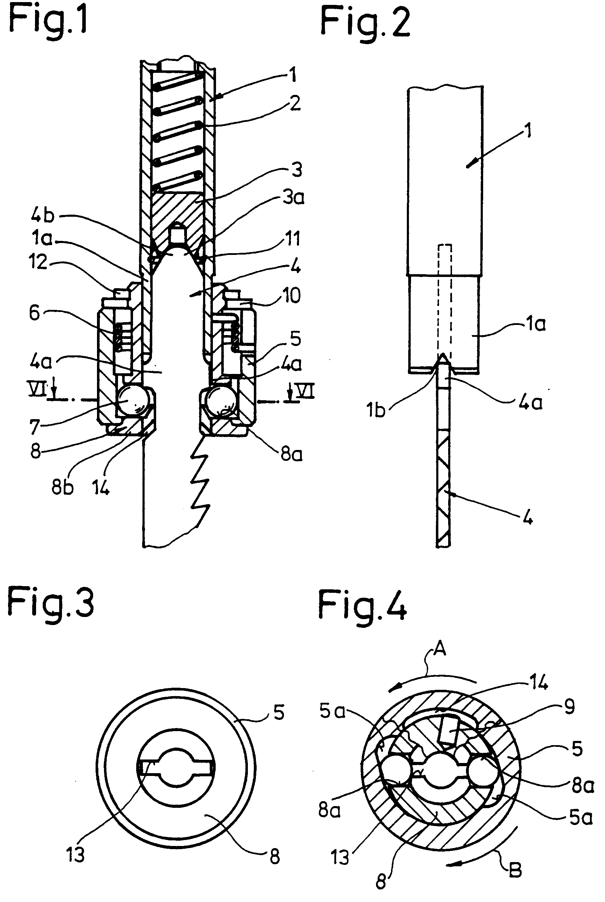

In Fig. 1 ist lediglich der untere Teil des Stößels 1 einer nicht dargestellten Stichsäge gezeigt, da die Schnellspannvorrichtung so einfach und rationell aufgebaut ist, daß im Bereich der Stichsäge selbst keine Manipulationen erforderlich sind oder Teilkomponenten aufgenommen werden müssen.

Der Stößel 1 ist, jedenfalls im unteren Bereich, im wesentlichen als Hohlraum gebildet und lagert unverrückbar eine hohle Hülse, die im folgenden als Kugelträger 8 bezeichnet wird. Die Hülse des Kugelträgers 8 ist auf einen unteren, im Durchmesser geringfügig kleineren Endbereich 1a des Stößels 1 aufgeschoben und weist selbst im unteren Bereich seitliche Ausnehmungen 8a auf, in denen Arretierelemente 7 sitzen, die bevorzugt Kugeln sind. Die seitlichen Durchtritte für die Kugeln im Wandbereich des Kugelträgers 8 sind besonders gut in der Darstellung der Fig. 4 zu erkennen, wobei entsprechend Fig. 1 der Kugelträger 8 noch einen unteren, nach außen vorspringenden Ringwulst 8b aufweist, auf welchem eine Drehhülse 5 gelagert ist. Die Drehhülse 5 ist oben mittels einer zwischengelegten Paßscheibe 10 und eines Sprengrings 11 am Kugelträger 8 gesichert und weist in ihrer Innenwandung auf der Höhe der Sperrkugeln, also der radial beweglichen Haltemittel für jede Sperrkugel eine Steuerbahn 5a auf, die bei dem dargestellten Ausführungsbeispiel diametral gegenüberliegen, da lediglich zwei Sperrkugeln vorhanden sind, entsprechend den beiden seitlichen Vorsprüngen 4a des in der Schnellspannvorrichtung aufgenommenen Stichsägeblattes 4.

Ferner ist die Drehhülse 5 von einer peripher, also in Umfangrichtung der Drehhülse wirkenden Vorspannungsfeder 6 als Drehfeder beaufschlagt, und zwar in einer solchen Richtung, daß bei losgelassener, also frei drehbarer Drehhülse 5 die Sperrkugeln von den Drehhülsen-Steuerbahnen 5a nach innen gedrückt werden.

Das Stichsägeblatt 4 ist dabei von für sich gesehen üblicher Gestalt und weist im Einspannbereich nach oben eine sich verjüngende Spitze 4b auf sowie die übliche Kreuzform mit den beiden seitlichen Vorsprüngen 4a, 4b, die der Aufnahme und Arretierung des Stichsägeblattes 4 in der Schnellspannvorrichtung dienen.

Insbesondere aus der Darstellung der Fig. 2 wird noch deutlich, daß das mit seinem oberen Bereich bis etwa zu den seitlichen Vorsprüngen 4a, 4b direkt in den Stößel eingeführte Stichsägeblatt 4 mit seinen beiden seitlichen Vorsprüngen 4a in der eingespannten Lockposition mit den oberen Kanten seiner beiden seitlichen Vorsprünge 4a in sich nach oben verjüngenden, vorzugsweise konisch dreieckförmig verlaufenden Aufnahmenuten 1b des Stößels sitzt und hierdurch, nämlich durch den ständigen, von den Sperrkugeln nach oben auf das Stichsägeblatt ausgeübten Preßdruck auch zentriert in diesen Aufnahmenuten 1b und somit gegen jede Verdrehung gesichert gehalten ist, und zwar wohlgemerkt formschlüssig gehalten ist, da, wie weiter unten noch im Zusammenhang mit einer Erläuterung der Funktion beschrieben wird, die Sperrkugeln 8a nicht nach außen ausweichen können.

Die in Fig. 1 gezeigte Schnellspannvorrichtung für Stichsägeblätter vervollständigt sich schließlich noch durch eine weitere Ausgestaltung, die einen axial gleitverschieblich im hohlen Stößel 1 geführten Gegenhalter 3 umfaßt, der von einer Druckfeder 2 nach unten vorgespannt ist. Der Gegenhalter 3 weist dort, wo er an den verjüngten Endbereich 4b des Stichsägeblatts 4 anstößt, eine konusförmige Zentrieröffnung 3a auf, so daß das eingeführte und formschlüssig festgeklemmte Stichsägeblatt 4 auch gegen Kippen vollständig gesichert ist.

Damit bei entnommenem Stichsägeblatt 4 der Gegenhalter 3 mit seiner Vorspannungsfeder 2 nicht aus der hohlen Aufnahmeöffnung am Stößel 1 herausfallen kann, ist noch ein Sprengring 11 vorgesehen, der für den Gegenhalter 3 eine untere Sitzposition markiert.

Die Wirkungsweise der Schnellspannvorrichtung entsprechend den Figuren 1 bis 4 ist dann so, daß zum Einsetzen eines Stichsägeblattes dieses in die schlitzförmige Aufnahmeöffnung 13 am Kugelhalter 8 bzw. an einem separaten Einsatz 14 in einer unteren Aufnahmeöffnung des Kugelhalters eingeführt und nach oben gedrückt wird, wobei gleichzeitig manuell die Drehhülse 5 in Richtung des Pfeiles A im Gegenuhrzeigersinn so verdreht wird, daß die Sperrkugeln als Arretierelemente 7 in die zurückweichenden, also eine größere Aufnahmetiefe aufweisenden Bereiche der Führungsbahnen einfallen können und insofern radial nach außen zurückweichen. Dies ermöglicht es den seitlichen Haltevorsprüngen 4a am Stichsägeblatt 4, die Sperrkugeln zu passieren, und die in Fig. 1 dargestellte Lochposition zu erreichen, wobei bei diesem Aufwärtsdrücken die Spitze 4b des Stichsägeblattes 4 auch gegen den Gegenhalter 3 drückt, in dessen Zentrieröffnung 3a gelangt und den Gegenhalter 3 gegen Federdruck nach oben schiebt, bis bei wieder losgelassener Drehhülse diese sich nunmehr selbsttätig aufgrund der Wirkung der eigenen Vorspannungsfeder 6 im Uhrzeigersinn entsprechend der Richtung des Pfeiles B zurückdreht und die Sperrkugeln zunehmend nach innen drückt. Da die Steuerbahnen 5a für die Sperrkugeln in der Drehhülse zunehmend immer flacher mit immer flacherem Anstellwinkel verlaufen, werden auch bei nur mittleren Rückstellkräften der auf die Drehhülse 5 wirkenden Vorspannungs-Drehfeder 6 die Kugeln mit großer Kraft nach innen gedrückt, so daß sie dann in etwa so an den unteren Randkanten der beidseitigen Vorsprünge 4a des Stichsägeblatts 4 zur Anlage kommen, wie dies in der Darstellung der Fig. 1 gezeigt ist. Hierdurch pressen die Sperrkugeln, was von den jeweiligen Abmessungen, also Kugeldurchmesser, Form der Vorsprünge 4a u. dgl. erkennbar abhängt, das Stichsägeblatt mit ständigem Druck nach oben gegen den Gegendruck des Gegenhalters und bewirken insbesondere, daß die oberen Randkanten der Vorsprünge 4a in die zentrierenden Aufnahmenuten 1b am Stößel 1 gedrückt werden, wie dies weiter vorn schon anhand der Darstellung der Fig. 2 erläutert worden ist. Hierdurch ergibt sich ein fester, unverrückbarer und formschlüssig gesicherter Sitz des Stichsägeblattes in der Schnellspannvorrichtung, wobei auch rauher Betrieb und gerade eventuelle Vibrationen am Stichsägeblatt eher noch dafür sorgen, daß aufgrund des ständig einwirkenden Rückstelldrucks der Drehfeder 6 der formschlüssige Sitz nur immer noch stärker fixiert wird, da erkennbar der flache Anstieg der Steuerkurven in der Fixierposition eine Art Untersetzungswirkung ausübt, indem auch nur gernige zusätzliche Winkelverdrehungen in die endgültige Fixierposition kaum noch wahrnehmbare, aber besonders kraftvolle Radialverschiebungen der Sperrkugeln nach innen bewirken.

Man erkennt daher auch, daß selbst ausgeschlagene Stichsägeblätter so sicher aufgenommen und fixiert werden können, da der Zustellbereich der Sperrkugeln lediglich durch deren formschlüssigen Endanschlag an den Kanten der Vorsprünge 4a begrenzt wird. Durch das Zusammenwirken der verschiedenen Halte- und Zentriermechanismen ist daher sichergestellt, daß das formschlüssig eingespannte Sägeblatt zentriert rechtwinklig zum Sägetisch gehalten ist, wobei auch die Feder 2 in Verbindung mit der Drehfeder 6 einen Anteil am zentrierten sicheren Sitz des Stichsägeblattes hat.

Schließlich ist aus der Darstellung der Fig. 4 noch ein Anschlagstift 9 zu erkennen, der an geeigneter Stelle stationär im Bereich des Kugelträgers 8 angeordnet ist und in eine über den Umfang verlaufende Ausnehmung 14 innen an der Drehhülse 5 eingreift, so daß die Endanschlagposition der Drehhülse festgelegt ist.

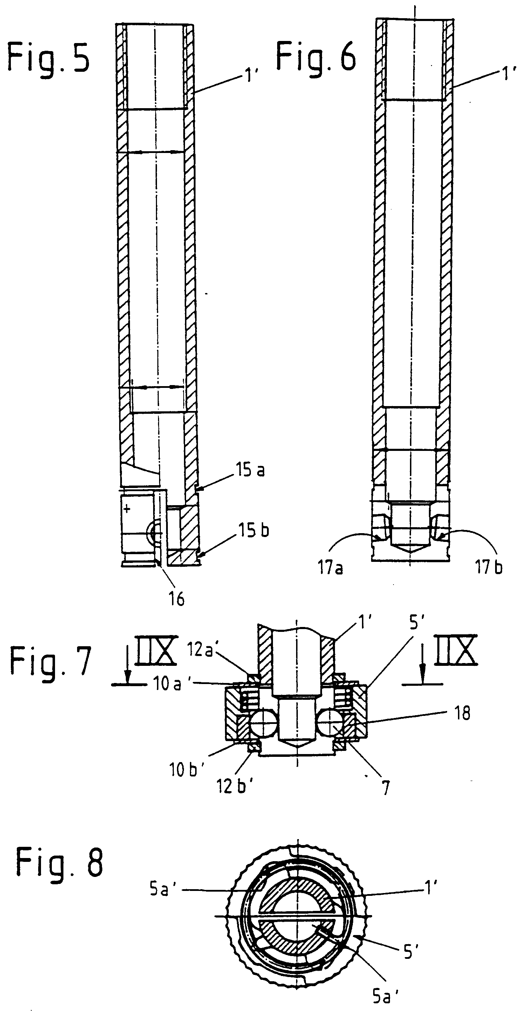

Bei einer weiteren bevorzugten Ausführungsform der Erfindung, die in den Fig. 5, 6, 7 und 8 dargestellt ist, ist die Kugelaufnahme direkt in den Stößel gelegt unter Verzicht auf einen gesonderten Kugelträger, wodurch die Mechanik eines solchen Schnellspannmechanismus entsprechend kleiner baut, also weniger Masse aufweist.

Dies hat wiederum besondere Vorzüge im notwendigen Gegengewicht des Stößels bei dessen Auswuchten, so daß sich eine kostengünstigere Herstellung insgesamt ergibt.

Der in den Fig. 5 bis 8 dargestellte Stößel 1' lagert unmittelbar die Drehhülse 5' zwischen zwei Sicherungsringen 12a', 12b', die die Drehhülse durch zwischengefügte Beilegscheiben 10a', 10b' haltern, wobei die Sicherungsringe in Ringnuten 15a, 15b des Stößels aufgenommen sind.

Symmetrisch zum Aufnahmeschlitz 16 im Stößel 1' für das Sägeblatt befinden sich einander gegenüberliegende Kugelaufnahmebohrungen 17a, 17b, die im schwachen Winkel nach oben geneigt verlaufen und, wie am besten der Darstellung der Fig. 7 entnommen werden kann, von beiden Seiten seitliche Vorsprünge des aufgenommenen Sägeblatts hintergreifen, wobei der bei beiden Ausführungsformen gleich ausgebildete Gegenhalter im Stößel aus Gründen der Klarheit nicht dargestellt ist.

Auch bei dieser Ausführungsform befinden sich in der Drehhülse 5', wie am besten der Fig. 8 entnommen werden kann, Steuerbahnen 5a', die beim Zurücklaufen der Drehhülse 5' in ihre Lockposition die in den Stößelbohrungen 17a, 17b gelagerten als Sperrkugeln ausgebildeten Arretierelemente 7 nach innen drücken.

Es ist möglich, die Kugellaufbahnen oder Steuerbahnen 5a' in der Drehhülse 5' durch eine Einlage 18 geeigneter Form zu realisieren.

## Patentansprüche

1. Schnellspannvorrichtung für Stichsägeblätter, mit einer Aufnahme im Stößel (1) der Stichsäge, sowie mit Haltemitteln, die seitliche Vorsprünge (4a) am Stichsägeblatt (4) hintergreifen und dadurch das Stichsägeblatt (4) nach unten gegen ein Herausfallen sichern, wobei am Stößel (1) eine in Umfangrichtung drehbar vorgespannte Drehhülse (5) gelagert ist, die mit Innenflächen Steuerbahnen (5a) für die als radial bewegliche Arretierelemente (7) ausgebildete Haltemittel für das Sägeblatt (4) bildet, dadurch gekennzeichnet, daß am Stößel (1) ein hülsenförmiger Kugelträger (8) sitzt, der die als Sperrkugeln ausgebildeten Arretierelemente (7) in radialen Durchtrittsöffnungen lagert und nach außen drehbar die Drehhülse (5) aufnimmt, die von einer zwischen ihr und dem Kugelträger (8) in einem Zwischenraum gelagerten Drehfeder (6) in die zweite Winkelposition vorgespannt ist.

2. Schnellspannvorrichtung für Stichsägeblätter, mit einer Aufnahme im Stößel (1') der Stichsäge, sowie mit Haltemitteln, die seitliche Vorsprünge (4a) am Stichsägeblatt (4) hintergreifen und dadurch das Stichsägeblatt (4) nach unten gegen ein Herausfallen sichern, wobei am Stößel (1') eine in Umfangrichtung drehbar vorgespannte Drehhülse (5') gelagert ist, die mit Innenflächen Steuerbahnen (5a') für die als radial bewegliche Arretierelemente (7) ausgebildete Haltemittel für das Sägeblatt (4) bildet, dadurch gekennzeichnet, daß die Aufnahme für die als Sperrkugeln ausgebildeten Arretierelemente (7) direkt vom Stößel (1') gebildet ist, der nach außen lediglich die Drehhülse (5') mit ihren Steuerbahnen (5a') und der Federvorspannung lagert, wobei die Sperrkugeln (7) in einer gegenüberliegenden Querbohrung des Stößelschafts sitzen.

3. Schnellspannvorrichtung nach Anspruch 1 oder 2, dadurch gekennzeichnet, daß in einer vorgegebenen ersten Winkelposition der Drehhülse (5, 5') Durchtritt des einzuspannenden Teils des Stichsägeblatts mit oberer Spitze (4b) und seitlichen Vorsprüngen (4a) in die Aufnahme möglich und in einer zweiten, aufgrund einer Federvorspannung von der Drehhülse (5, 5') selbsttätig nach Loslassen eingenommenen Winkelposition die Arretierelemente unter die seitlichen Vorsprünge (4a) am Stichsägeblatt (4) hervortreten.

4. Schnellspannvorrichtung nach einem der Ansprüche 1 bis 3, dadurch gekennzeichnet, daß zusätzlich zu der Sicherung der seitlichen Sägeblattvorsprünge durch die Arretierelemente (7) obere Randkanten der seitlichen Vorsprünge (4a) von zentrierenden Aufnahmenuten (1b) am Stößel (1, 1') aufgenommen sind.

5. Schnellspannvorrichtung nach einem der Ansprüche 1-4, dadurch gekennzeichnet, daß ein axial im Stößel (1, 1') unter Federvorspannung gelagerter Gegenhalter (3) vorgesehen ist.

6. Schnellspannvorrichtung nach einem der Ansprüche 1-5, dadurch gekennzeichnet, daß der Gegenhalter (3) die obere Sägeblattspitze (4b) mit einer Zentrieröffnung (3a) erfaßt und sichert.

7. Schnellspannvorrichtung nach einem der Ansprüche 1-6, dadurch gekennzeichnet, daß der Durchmesser der Sperrkugeln (7) einerseits, die Höhe der seitlichen Vorsprünge (4a) am Stichsägeblatt (4) andererseits sowie der Abstand der konisch nach oben zulaufenden Aufnahmenuten (1b) am Stößel (1, 1') so bemessen ist, daß das jeweilige Stichsägeblatt in der Lockposition spielfrei formschlüssig in seinem Sitz gehalten ist bei über die Sperrkugeln ständig einwirkender, nach oben gerichteter Preßkraft, die die seitlichen Vorsprünge (4a) des Stichsägeblatts in die Aufnahmenuten (1b) gegen den Druck des Gegenhalters (3) vorspannt.

8. Schnellspannvorrichtung nach einem der Ansprüche 1-7, dadurch gekennzeichnet, daß die Steuerbahnen (5a, 5a') in der Innenwandung der Drehhülse so ausgebildet sind, daß der Steuerbahnenwinkel mit zunehmend nach innen gerichteter Positionsverlagerung der Sperrkugeln flach verläuft derart, daß, ergänzt durch die Rückstellwirkung der auf die Drehhülse (5, 5') einwirkenden Drehfeder (6) mindestens Selbsthemmung bzw. in eine immer stärker werdende Zustellung der Sperrkugeln wirksam wird.

9. Schnellspannvorrichtung nach Anspruch 2, dadurch gekennzeichnet, daß die Querbohrungen (17a, 17b) zur Aufnahme der Sperrkugeln (7) im Stößelschaft (1') von außen nach innen schräg nach oben geneigt verlaufen.

## Claims

1. A quick-action clamping device for compass-saw blades, with a receiving means in the plunger (1) of the compass saw, and with holding means which engage behind side projections (4a) on the compass-saw blade (4) and thereby prevent the compass-saw blade (4) from falling downwards, wherein a rotary sleeve (5) rotatably pre-stressed in the peripheral direction is mounted on the plunger (1), inner surfaces of the rotary sleeve (5) forming control paths (5a) for the holding means - in the form of radially movable arresting elements (7) - for the saw blade (4), **characterized in that** the plunger (1) has mounted thereon a sleeve-shaped ball carrier (8) which supports the arresting elements (7) in the form of locking balls in radial through openings and receives the rotary sleeve (5) in an outwardly rotatable manner, the rotary sleeve (5) being pre-stressed into the second angular position by a torsion spring (6) mounted between it and the ball carrier (8) in an intermediate space.

2. A quick-action clamping device for compass-saw blades, with a receiving means in the plunger (1') of the compass saw, and with holding means which engage behind side projections (4a) on the compass-saw blade (4) and thereby prevent the compass-saw blade (4) from falling downwards, wherein a rotary sleeve (5') rotatably pre-stressed in the peripheral direction is mounted on the plunger (1'), inner surfaces of the rotary sleeve (5') forming control paths (5a') for the holding means - constructed in the form of radially movable arresting elements (7) - for the saw blade (4), **characterized in tha**t the receiving means for the arresting elements (7) constructed in the form of locking balls is formed directly by the plunger (1') which on the outside supports only the rotary sleeve (5') with its control paths (5a') and with the pre-stressing by a spring, wherein the locking balls (7) are mounted in an opposite transverse bore in the plunger shaft.

3. A quick-action clamping device according to Claim 1 or 2, **characterized in that** in a pre-set first angular position of the rotary sleeve (5, 5') the passage of the compass-saw blade part to be clamped with an upper tip (4b) and side projections (4a) into the receiving means is possible, and in a second angular position automatically occupied by the rotary sleeve (5, 5') on account of pre-stressing by a spring after being released the arresting elements protrude below the side projections (4a) on the compass-saw blade (4).

4. A quick-action clamping device according to one of Claims 1 to 3, **characterized in that** in addition to the fastening of the side saw-blade projections by the arresting elements (7) upper edges of the side projections (4a) are received by centring receiving grooves (1b) on the plunger (1, 1').

5. A quick-action clamping device according to one of Claims 1 to 4, **characterized in that** a counter holding means (3) mounted axially in the plunger (1, 1') under pre-stressing by a spring is provided.

6. A quick-action clamping device according to one of Claims 1 to 5, **characterized in that** the counter holding means (3) grips and secures the upper saw-blade tip (4b) with a centring opening (3a).

7. A quick-action clamping device according to one of Claims 1 to 6, **characterized in that** the diameter of the locking balls (7) on the one hand and the height of the side projections (4a) on the compass-saw blade (4) on the other hand as well as the distance of the receiving grooves (1b) converging upwards in a tapered manner on the plunger (1,1') are dimensioned in such a way that the respective compass-saw blade is held in its seat with positive locking and without play in the locked position with an upwardly directed pressing force which acts constantly by way of the locking balls and which pre-stresses the side projections (4a) of the compass-saw blade in the receiving grooves (1b) against the pressure of the counter holding means (3).

8. A quick-action clamping device according to one of Claims 1 to 7, **characterized in that** the control paths (5a, 5a') in the inner wall of the rotary sleeve are constructed in such a way that the control-path angle extends flat with a position displacement - orientated inwards to an increasing extent - of the locking balls in such a way that, increased by the restoring action of the torsion spring (6) acting upon the rotary sleeve (5, 5'), at least selflocking or increasingly powerful locking of the locking balls comes into effect.

9. A quick-action clamping device according to Claim 2, **characterized in that** the transverse bores (17a, 17b) for receiving the locking balls (7) in the plunger shaft (1') extend inwards from the outside at an oblique upward inclination.

## Revendications

1. Dispositif de serrage rapide de lames de scie sauteuse, comprenant un logement dans le poussoir (1) de la lame, des moyens de maintien venant en prise sur des saillies latérales (4a) de la lame (4) qui se trouve ainsi empêchée de s'échapper par gravité, tandis que sur le poussoir (1) est montée sous précontrainte de rotation une douille pivotante (5) présentant des portées internes qui forment des pistes de commande (5a) pour des moyens assurant le maintien de la lame de scie (4) et ayant la forme d'éléments de blocage (7) mobiles radialement,
caractérisé en ce que
sur le poussoir (1) se trouve un porte-billes (8) en forme de douille contenant les éléments de blocage (7) constitués par des billes logées dans des ouvertures de passage radiales, la douille rotative (5) étant montée extérieurement sur le porte-billes (8), un ressort de rotation (6) logé dans un espace situé entre la douille et le porte-billes, exerçant sur la douille une contrainte dans la deuxième position angulaire.

2. Dispositif de serrage rapide de lames de scie sauteuse, comprenant un logement dans le poussoir (1') de la lame, des moyens de maintien venant en prise sur des saillies latérales (4a) de la lame (4) qui se trouve ainsi empêchée de s'échapper par gravité, tandis que sur le poussoir (1') est montée sous précontrainte de rotation une douille pivotante (5) présentant des portées internes qui forment des pistes de commande (5a') pour des moyens assurant le maintien de la lame de scie (4) et ayant la forme des éléments de blocage (7) mobiles radialement,
caractérisé en ce que
le logement recevant les éléments d'arrêt (7) en forme de billes est constitué directement par le poussoir (1') qui porte simplement, à l'extérieur, la douille rotative (5') avec ses pistes de commande et la précontrainte du ressort, les billes d'arrêt (7) étant logées dans un alésage transversal situé en face, dans la tige du poussoir.

3. Dispositif de serrage rapide selon la revendication 1 ou 2,
caractérisé en ce que
dans une première position angulaire donnée de la douille rotative (5, 5'), il est possible d'introduire dans le logement la partie à serrer de la lame comprenant sa pointe supérieure (4b) et ses saillies latérales (4a), tandis que dans une seconde position angulaire que prend automatiquement, lorsqu'on la lâche, la douille rotative (5,5') sous la contrainte du ressort, les éléments d'arrêt viennent se placer sous les saillies latérales (4a) de la lame (4).

4. Dispositif de serrage selon une des revendications 1 à 3,
caractérisé en ce qu'
en plus de la sécurité assurée sur les saillies de la lame par les éléments de blocage (7), les bords supérieurs des saillies (4a) sont logés dans des rainures de centrage (1b) portées par le poussoir (1,1').

5. Dispositif de serrage selon une des revendications 1 à 4,
caractérisé en ce qu'
il est prévu dans le poussoir (1, 1') un contrepalier (3) sous contrainte élastique.

6. Dispositif de serrage selon une des revendications 1 à 5,
caractérisé en ce que
le contrepalier (3) entoure et maintient la pointe supérieure (4b) de la lame de scie, par une ouverture de centrage (3a).

7. Dispositif de serrage selon une des revendications 1 à 6,
caractérisé en ce que
le diamètre des billes d'arrêt (7) d'une part, la hauteur des saillies latérales (4a) de la lame de scie (4) d'autre part, ainsi que les rainures de logement (1b), coniques vers le haut que porte le poussoir (1, 1') sont dimensionnées de manière que la lame de scie, en position montée, est maintenue verrouillée et sans jeu par liaison par la forme dans son siège, avec une force d'application exercée en permanence par les billes vers le haut, cette force appliquant sous tension les saillies latérales (4a) de la lame dans les rainures (1b) contre la poussée du contrepalier (3).

8. Dispositif de serrage selon une des revendications 1 à 7,
caractérisé en ce que
les pistes de commande (5a, 5a') pratiquées sur l'intérieur de la paroi de la douille rotative ont une configuration telle que l'angle des pistes de commande lorsque la position des billes d'arrêt se déplace davantage vers l'intérieur, a un tracé plat qui, complété par l'effet de rappel produit par le ressort de rotation (6) sur la douille rotative (5, 5') produit au moins un autoblocage c'est-à-dire une avancée de plus en plus forte des billes d'arrêt.

9. Dispositif de serrage selon la revendication 2,
caractérisé en ce que
les perçages transversaux (17a, 17b) servant de logement aux billes d'arrêt (7) dans la tige de poussoir (1') sont en pente montante de l'extérieur vers l'intérieur.
